# EUROPEAN PATENT SPECIFICATION

(11) **EP 0 752 326 B1**
(45) Date of publication and mention of the grant of the patent: **19.01.2000**
(21) Application number: 96304750.1
(22) Date of filing: 27.06.1996
(51) Int. Cl.: B60C 11/00

(54) **Pneumatic tyre**
Luftreifen
Bandage pneumatique

(30) Priority: 03.07.1995 JP 16757095
(43) Date of publication of application: 08.01.1997
(73) Proprietor: SUMITOMO RUBBER INDUSTRIES LIMITED, Kobe-shi, Hyogo-ken (JP)
(72) Inventor: Suzuki, Kazuya, Shirakawa-shi, Fukushima-ke (JP)
(74) Representative: Stewart, Charles Geoffrey

(56) References cited:
- EP-A- 0 454 659
- EP-A- 0 495 619
- PATENT ABSTRACTS OF JAPAN vol. 009, no. 272 (M-425), 30 October 1985 & JP 60 116511 A (SUMITOMO GOMU KOGYO KK), 24 June 1985,
- PATENT ABSTRACTS OF JAPAN vol. 095, no. 001, 28 February 1995 & JP 06 297916 A (OHTSU TIRE & RUBBER CO LTD:THE), 25 October 1994,

## Description

The present invention relates to a pneumatic tyre in which tread pattern noise is reduced without sacrificing the wear resistance and steering stability.

Tyres having circumferentially spaced tread elements such as blocks generate a relatively large noise, the so called tread pattern noise.

It is well known in the art to utilise a variable pitching method to vary the circumferential lengths of tread elements (e.g. blocks) and the circumferential widths of lateral grooves therebetween so as to widen the frequency range of the generated noise. Such a method is disclosed in, for example, the laid-open Japanese Patent application Nos. 63-275407 (corresponding to the preamble of claim 1), and 64-4501.

In this method, however, the block rigidity becomes inevitably uneven because of the different circumferential lengths, and thus uneven tread wear is caused. Further, steering stability is liable to be deteriorated.

It is therefore, an object of the present invention to provide a pneumatic tyre in which the tread pattern noise is reduced without deteriorating the wear resistance and steering stability.

According to the present invention, a pneumatic tyre comprises a tread portion provided with circumferentially spaced lateral grooves and tread elements therebetween, the lateral grooves and tread elements being alternately disposed in the tyre circumferential direction to define a sequence of pitches of the tread pattern design cycle, one pitch being the total of the circumferential length of one of the tread elements and the circumferential width of one of the adjacent lateral grooves on the same circumferential side of the tread elements, characterised in that in a sequence of the pitches, all the tread elements are the same circumferential length, but the circumferential widths of the lateral grooves are varied so that the pitches are varied along the tyre circumferential direction to reduce the pattern noise.

In a sequence of the pitches, the ratio (PL/PS) of the maximum pitch length (PL) to the minimum pitch length (PS) is preferably set in the range of from 1.05 to 1.50.

Therefore, the rigidity of the tread elements such as blocks is evened in the tyre circumferential direction, and uneven tread wear due to uneven rigidity distribution is avoided.

Embodiments of the present invention will now be described in detail in conjunction with the accompanying drawings, in which:
Fig.1 is a cross sectional view of a pneumatic tyre according to the present invention;
Fig.2 is a developed plan view showing an example of the tread pattern; and
Fig.3 is a developed plan view showing another example of the tread pattern.

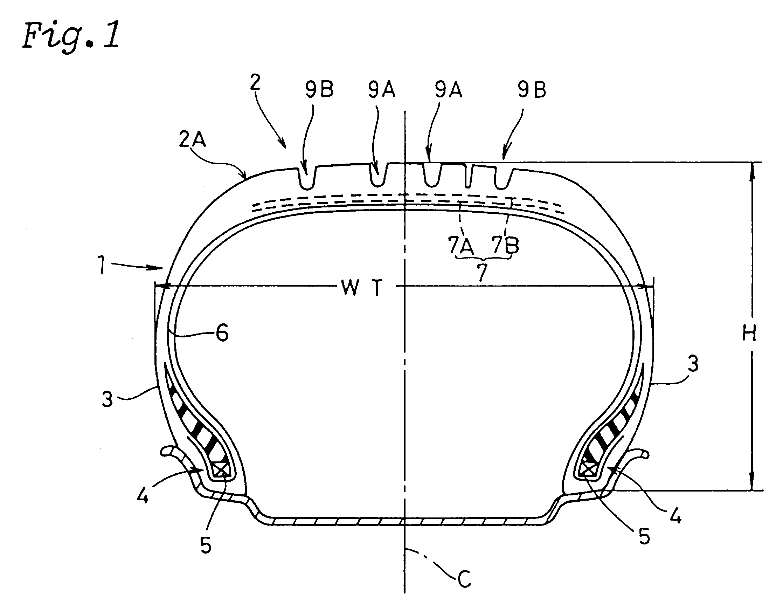

In Fig.1, a pneumatic tyre 1 comprises a tread portion 2 defining a tread 2A, a pair of sidewall portions 3, a pair of bead portions 4 with a bead core therein, a carcass 6 extending between the bead portions 4 through the tread portion 2 and sidewall portions 3 and turned up around the bead cores 5 to be secured thereto, and a stiff belt 7 disposed radially outside the carcass 6 in the tread portion 2 to provide a hoop effect for the carcass 6.

In this embodiment, the pneumatic tyre is a passenger tyre having an aspect ratio H/WT of not more than 0.8, in this embodiment 0.6 where the actual ratio is the ratio of the tyre section height H to the tyre maximum width WT.

The carcass 6 comprises at least one ply of cords arranged radially at an angle of from 90 to 60 degrees with respect to the tyre equator C to have the so called radial structure. For the carcass cords, organic fibre cords, e.g. polyester, nylon, rayon and the like and steel cords can be used.

The belt 7 comprises at least one ply, in this embodiment an inner ply 7A and an outer ply 7B, made of belt cords laid at an angle of from 10 to 30 degrees with respect to the tyre equator C. The plies 7A and 7B are oriented in different directions so that the belt cords in each ply cross the cords of the adjacent ply. For the belt cords, organic fibre cords, e.g. nylon, aramid, polyester, rayon and the like and metal cords, e.g. steel can be used.

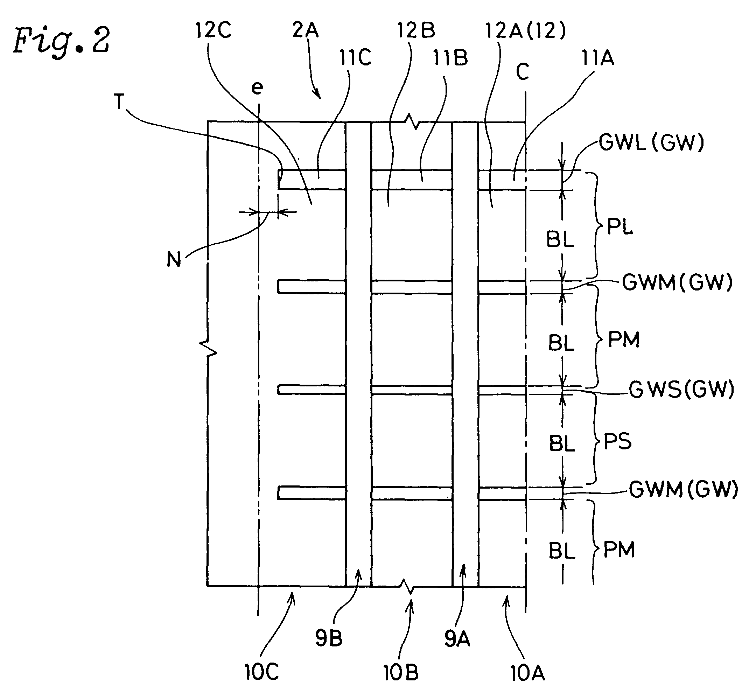

Fig.2 shows a tread pattern which can be used for the tread 2A. This pattern is symmetric about the tyre equator C. Thus, only a left half thereof is shown for convenience sake.

This tread pattern comprises four main grooves 9A and 9B disposed in the tread 2A each extending continuously in the tyre circumferential direction, thereby defining a central land portion 10A between the two main grooves 9A, two middle land portions 10B between the main grooves 9A and 9B, and two outer land portions 10C between the main grooves 9B and the tread edges (e).

The width of the main grooves 9A and 9B is preferably in the range of from 5 to 25 mm. In this example, a straight groove having a constant width is used for the main grooves 9A and 9B, and the width is 10 mm. However, zigzag or wavy grooves can be used.

The depth of the main grooves 9A and 9B is preferably in the range of from 5 to 18 mm. In this embodiment, the depth is 8 mm and constant along the longitudinal direction thereof.

The central land portion 10A and the middle land portions 10B are provided with lateral grooves 11A and 11B which extend across the respective land portions 10A and 10B, and both the axial ends of each lateral groove are opened in the side faces of the land portions. Accordingly, the central land portion 10A and the middle land portions 10B are each divided into a plurality of circumferentially spaced blocks 12A, 12B.

In this example, the lateral grooves 11A are aligned with the lateral grooves 11B.

Further, each of the outer land portions 10C is provided with a plurality of lateral grooves 11C which extend across the land portion 10C, and of which the axial inner ends are opened in the side face of the land portion in the main grooves 9B side. But the axial outer ends terminate in the land portion 10C before the tread edge (e). Accordingly, an axially inner part of the outer land portion 10C is divided into circumferentially spaced blocks 12C, but the remaining axially outer part thereof is continuous in the tyre circumferential direction. The axial width N of this circumferentially continued part T is in the range of from 5 to 30 mm.

The lateral grooves 11C are aligned with the lateral grooves 11A and 11B.

In every land portion in this embodiment, the blocks 12A, 12B, 12C (generically 12) are arranged at variable pitches PL, PM, PS (generically P) in the tyre circumferential direction. Here, one pitch P is defined as the total length of one of the blocks 12 (12A, 12B, 12C) and one of the circumferentially adjacent lateral grooves 11 (11A, 11B, 11C) on the same circumferential side of the blocks.

According to the present invention, in each land portion, the circumferential widths of the lateral groove 11A, 11B, 11C (generically 11) are varied. However, all the blocks 12 are the same circumferential length BL.

In this embodiment, the lateral grooves 11 in each land portion have three circumferential widths GWS, GWM and GWL. (GWS < GWM < GWL) Therefore, the above-mentioned pitches P (=BL+GWi, i=suffix: S, M or L) comprises three different pitches PS, PM and PL.

The circumferential widths GW of the lateral grooves 11 are in the range of from 1 to 15 mm, and in this embodiment, the groove depths of the lateral grooves 11A to 11C are the same and constant along the longitudinal direction, and the aligned lateral grooves 11A, 11B and 11C are the same circumferential width GW.

In each block row, therefore, the blocks 12A, 12B, 12C are even in the rigidity around the tyre, and the tyre performances, e.g. wear resistance, steering stability and the like are not decreased.

In each block row, the sequence of the lateral grooves 11 are such that each groove is followed by the next wider or the next narrower or the same width groove. For example, GWM, GWL, GWM, GWS, GWM, GWL ----

Further, in each land portion or each block row, the ratio (PL/PS) of the maximum pitch length PL(BL+GWL) to the minimum pitch length PS(BL+GWS) is preferably in the range of from 1.05 to 1.50. If the ratio (PL/PS) is less than 1.05, the tread pattern noise can not be decreased. If the ratio (PL/PS) is more than 1.50, the pitch length variation is too large and the wear resistance is liable to decrease although the blocks are the same circumferential length.

Preferably, the ratio (PL/PS) is in the range of from 1.10 to 1.40, more preferably 1.20 to 1.30.

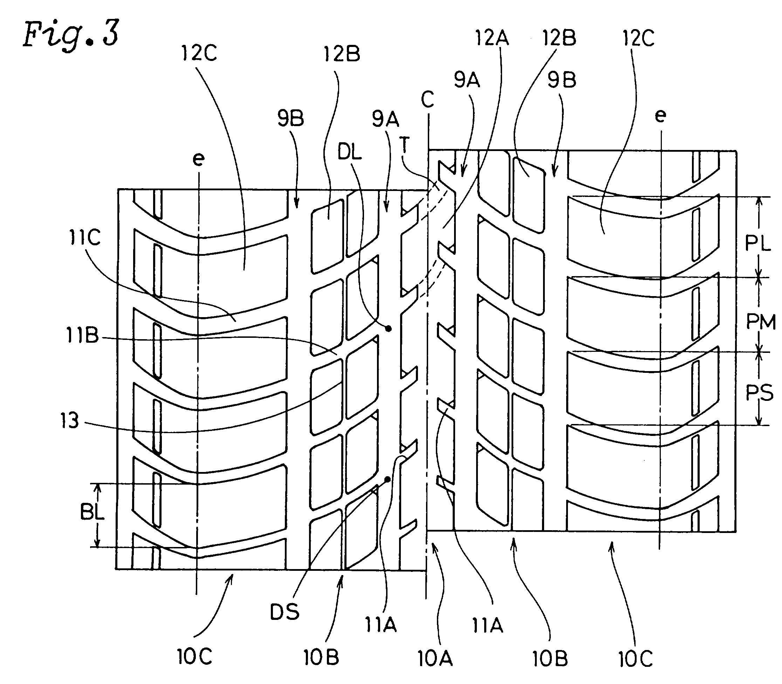

Fig.3 shows another example of the tread pattern which can be used with the tread 2A. This pattern is a directional pattern.

In this example, four main grooves 9A, 9A, 9B and 9B are disposed between the tread edges (e).

The width and depth of the main grooves are 10 mm and about 8 mm, respectively.

The middle land portions 10B and outer land portions 10C are provided with the lateral grooves 11B and 11C, respectively. The lateral grooves 11B, 11C in each land portions 10B, 10C are inclined with respect to the axial direction of the tyre in substantially parallel with each other. Thus, the blocks 12B and 12C are generally a parallelogram. The depth of the lateral grooves is 5 mm.

Each of the blocks 12B is provided with a narrow groove 13 circumferentially extending thereacross to axially subdivide the block 12B into two equiwidth parts. The width of the narrow grooves is 1 mm and the depth thereof is 3 mm.

Further, the central land portion 10A centred on the tyre equator C is provided with lateral grooves 11A which extend axially inwardly from the axial edges thereof and terminate in the land portion before the tyre equator C. Thus, the central land portion 10A is regarded as being composed of the blocks 12A connected in the tyre circumferential direction with a narrow width connecting part T. The block lengths BL of the blocks 12A, 12B and 12C are the same in each block row and between the block rows, that is, all the blocks 12A, 12B and 12C are the same length.

In this invention, it is preferable that the circumferential length of each tread element is substantially constant in the tyre axial direction and the circumferential width of each lateral groove is also substantially constant along the tyre axial direction. However, it is no matter that the corners between the lateral grooves and the circumferential groove are rounded and accordingly the groove width in this rounded portion is increased. Such a variation is negligible.

However, it may be also possible to vary the circumferential length and width in the axial direction if the variation is gradual and not so large. In this case, the circumferential length and width can be defined as the distance in the tyre circumferential direction between the corners formed between the lateral grooves and the circumferential groove. If the corners are rounded and thus definable, the intersections of the groove sidewall lines are used instead of edged corners. The circumferential length and width which are defined on one axial side of the tread elements must satisfy the above-explained limitations, but it is more preferable to satisfy the limitations on both sides of the tread elements.

Test tyres of size 205/60R15 were made and tested for the following performances.

The test tyres had the same tread pattern shown in Fig.3 except for the pitches, wherein Example tyres 1 to 7 according to the present invention had three pitch lengths PL, PM and PS; Reference tyre 1 had a single pitch length PM, wherein all the lateral grooves had the same width and all the blocks had the same length; and Reference tyres 2 and 3 had three pitch lengths PL, PM and PS being the same as Example tyres 1 to 7, but both the lateral grooves' widths and the blocks' lengths were varied.

The specifications and test results are shown in Table 1.
A) Dry and Wet steering stability test
   A 2000cc rear-wheel-driven car provided on all four wheels with the test tyres (Rim: 6JX15 standard rim, Pressure: 2.0 kgf/cm² front=rear, no passenger) was run on a dry asphalt road and a wet asphalt road in a tyre test course, and the steering stability was evaluated into five ranks by the driver's feeling. The larger the value, the better the stability.
B) Wear resistance test
   Using a test car prepared in the same way as in the above-mentioned test A), the test tyres were run for 3,000 kilometres on a highway and expressway. Then, the groove depth of the inner main groove was measured at positions DS and DL corresponding to the maximum and minimum widths of the lateral grooves as shown in Fig.3. In Table 1, the reciprocal of the difference therebetween (absolute value) is indicated by an index based on that the Ref. tyre 1 is 100. The larger the value, the better the wear resistance, and the wear was more even.
C) Interior noise test
   A test car prepared in the same way as in the above-mentioned test A) was run on a smooth road surface at a speed of 50 km/h, and the overall noise level in dB(A) was measured near the driver's inside ear and also in the centre of the rear seat at the ear's height. In Table 1, the mean value of the noise levels measured at the two positions is indicated by an index based on that the Ref. tyre 1 is 100. The larger the value, the smaller the noise level.

From the tests, it was confirmed that Example tyres 1 to 7 reduced the interior noise whilst maintaining steering stability. Especially, Example tyres 2 to 6 in which the ratio (PL/PS) was limited within the range of from 1.05 to 1.50 could satisfy both the interior noise and steering stability at a higher level. This effect was more remarkable in Example tyres 3, 4 and 5 in which the ratio (PL/PS) was limited within the range of from 1.20 to 1.40.

In the embodiments shown in Figs.2 and 3, the above-explained variable pitching method is applied to all the land portions. However, it can be applied to some of the land portions, for example, only the outer land portions 12C.

Further, in the embodiments shown in Figs.2 and 3, the lateral grooves are aligned between the adjacent land portions. Thus all the phases thereof and all the pitch sequences are the same. It is however, possible to shift the phases in the circumferential direction of the tyre with maintaining the same pitch sequences, and also possible to change the pitch sequences randomly between the adjacent land portions with substantially aligning or not aligning the lateral grooves.

As described above, the pneumatic tyres according to the present invention can be reduced in the tread pattern noise without sacrificing the wear resistance and steering stability.

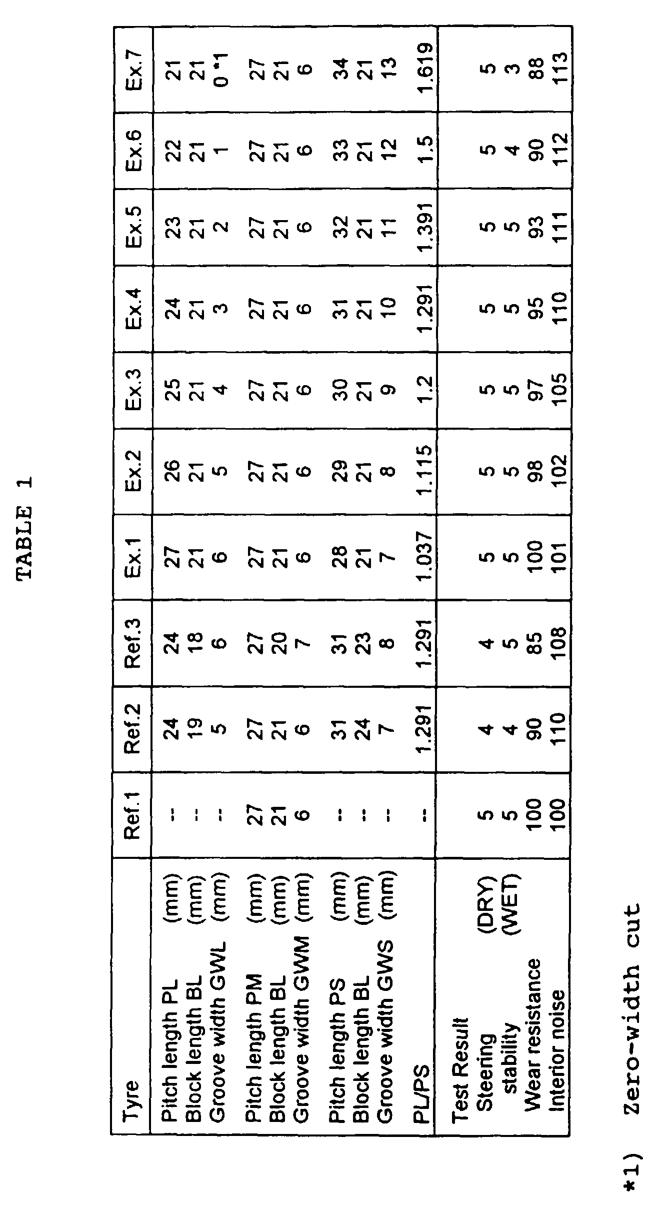

## Claims

1. A pneumatic tyre comprising a tread portion (2) provided with circumferentially spaced lateral grooves (11A,11B,11C) and tread elements (12A,12B) therebetween to define tread pattern design cycles, the lateral grooves and tread elements being alternately disposed in the tyre circumferential direction to define a sequence of pitches of the tread pattern design cycles, one pitch (P) being the total of the circumferential length of one of the tread elements (BL) and the circumferential width of one of the adjacent lateral grooves (GW) on the same circumferential side of the tread elements, characterised in that in a sequence of the pitches, all the tread elements are of the same circumferential length BL, but the circumferential widths of the lateral grooves are varied so that the pitches (P) are varied along the tyre circumferential direction to reduce the pattern noise.

2. A pneumatic tyre according to claim 1, characterised in that, in a sequence of the pitches, the ratio (PL/PS) of the maximum pitch length (PL) to the minimum pitch length (PS) is in the range of from 1.05 to 1.50.

## Patentansprüche

1. Luftreifen mit einem Laufstreifenabschnitt (2), der mit in Umfangsrichtung beabstandeten Querrillen (11A, 11B, 11C) und Laufstreifenelementen (12A, 12B) dazwischen versehen ist, um Zyklen eines Laufstreifenprofilentwurfs festzulegen, wobei die Querrillen und Laufstreifenelemente abwechselnd in der Umfangsrichtung des Reifens angeordnet sind, so daß eine Folge von Teilungsabständen der Zyklen des Laufstreifenprofilentwurfs festgelegt ist, wobei ein Teilungsabstand (P) die Summe aus der Umfangslänge von einem der Laufstreifenelemente (BL) und der Umfangsbreite von einer der benachbarten Querrillen (GW) auf der gleichen Umfangsseite der Laufstreifenelemente ist, dadurch gekennzeichnet, daß bei einer Folge der Teilungsabstände alle Laufstreifenelemente die gleiche Umfangslänge BL aufweisen, jedoch die Umfangsbreiten der Querrillen derart verändert sind, daß die Teilungsabstände (P) entlang der Umfangsrichtung des Reifens verändert sind, so daß das Profilgeräusch herverringert ist.

2. Luftreifen nach Anspruch 1,
dadurch gekennzeichnet, daß bei einer Folge der Teilungsabstände das Verhältnis (PL/PS) der maximalen Teilungslänge (PL) zur minimalen Teilungslänge (PS) im Bereich zwischen 1,05 und 1,50 liegt.

## Revendications

1. Pneumatique comprenant une partie (2) de bande de roulement ayant des gorges latérales espacées circonférentiellement (11A, 11B, 11C) et des éléments (12A, 12B) de bande de roulement placés entre elles pour la délimitation de cycles nominaux de sculpture de bande de roulement, les gorges latérales et les éléments de bande de roulement étant disposés en alternance dans la direction circonférentielle du pneumatique pour définir une séquence de pas des cycles nominaux de la sculpture de la bande de roulement, un pas (P) étant la somme de la longueur circonférentielle de l'un des éléments de bande de roulement (BL) et de la largeur circonférentielle de l'une des gorges latérales adjacentes (GW) du même côté circonférentiel des éléments de bande de roulement, caractérisé en ce que, dans une séquence de pas, tous les éléments de bande de roulement ont la même longueur circonférentielle BL, mais les largeurs circonférentielles des gorges latérales varient afin que les pas (P) varient dans la direction circonférentielle du pneumatique et que le bruit de la sculpture soit réduit.

2. Pneumatique selon la revendication 1, caractérisé en ce que, dans une séquence de pas, le rapport (PL/PS) de la longueur du pas maximal (PL) à la longueur du pas minimal (PS) est compris entre 1,05 et 1,50.
